(19) **Europäisches Patentamt**

**European Patent Office**

**Office européen des brevets**

(11) **EP 1 101 961 B1**

(12) **EUROPEAN PATENT SPECIFICATION**

(45) Date of publication and mention
of the grant of the patent:
**04.01.2006 Bulletin 2006/01**

(51) Int Cl.:
***F16C 19/16*** *(2006.01)*    ***F16C 33/58*** *(2006.01)*

(21) Application number: **99944945.7**

(22) Date of filing: **04.06.1999**

(86) International application number:
**PCT/RU1999/000191**

(87) International publication number:
**WO 2000/075523 (14.12.2000 Gazette 2000/50)**

(54) **ULTRAHIGH-SPEED UNIVERSAL ROLLER BEARING**

UNIVERSELLES WÄLZLAGER MIT ULTRAHOHER GESCHWINDIGKEIT

ROULEMENT UNIVERSEL ET A TRES GRANDE VITESSE

(84) Designated Contracting States:
**AT BE DE DK ES FI FR GB GR IT NL PT SE**

(43) Date of publication of application:
**23.05.2001 Bulletin 2001/21**

(73) Proprietors:
- **Smolyaninov, Vladislav Vladimirovich
  Moskovskaya obl., 142292 (RU)**
- **Smolyaninov, Vladimir Vladimirovich
  Moscow 121099 (RU)**
- **Smolyaninov, Viktor Vladislavovich
  Moskovskaya obl., 142292 (RU)**

(72) Inventors:
- **Smolyaninov, Vladislav Vladimirovich
  Moskovskaya obl., 142292 (RU)**

- **Smolyaninov, Vladimir Vladimirovich
  Moscow 121099 (RU)**
- **Smolyaninov, Viktor Vladislavovich
  Moscovskaya obl., 142292 (RU)**

(74) Representative: **HOFFMANN EITLE
Patent- und Rechtsanwälte
Arabellastrasse 4
81925 München (DE)**

(56) References cited:
| | |
|---|---|
| **DE-A- 1 955 045** | **FR-A- 2 699 238** |
| **GB-A- 2 073 828** | **SU-A- 681 248** |
| **SU-A- 1 625 336** | **SU-A3- 1 625 336** |
| **US-A- 714 612** | **US-A- 3 405 979** |
| **US-A- 4 293 171** | **US-A- 5 427 458** |

EP 1 101 961 B1

**Description**

The present invention concerns to a mass product of rolling bearing industry - to the ball bearing.

In the development of mechanical engineering and instrument-making, the bearing industry occupies one of the major places, since the reliability and resource of exploitation of modern high speed machines is substantially determined by the exploitation chacteristics of bearings.

The further improvements of bearing design are directed, on the one hand, to increasing their carrying capacity, durability and reliability, accuracy and speed of rotation, and on the other hand, to reducing their weight and noise.

The basic constructive types of rolling bearings are suitable for radial, radial-thrust and thrust load, with ball or roller as rolling elements. Besides, the rolling bearings can structurally differ by the number n of dot contacts, formed by a single rolling element with outside and internal rings. To this attribute the designs of three types are known: 2-dot (n=2), 3-dot (n=3) and 4-dot(n=4).

Closest on a design are the radial persistent ball bearings having 4-dot contact of balls with rings, as known from US 714 612 A, DE 1 955 045 A, US 3 405 979 A or FR 2 699 238 A. For comparison with the prototype it is necessary to allocate the basic geometrical characteristics of such bearings.

At $n = 2$ each of the rolling bodies form one-dot (single) contacts with each ring; at n = 3 each of the rolling bodies forms a two-dot (double) contact with one ring, and with the other ring forms a single contact; at n=4 each of the rolling bodies form two-dot contacts with each of the rings. The geometrical characteristic of double contact is served by an angle of double contact, which is equal to an internal angle between two beams having began at the centre of a rolling body and taking place through the two points of contact of this body with one of the rings, i.e. the points of contact are on an average line of a track. If the points of double contact or tracks pull together, at their overlapping the double contact turns into a single contact, and the angle of double contact becomes equal to zero. Thus, the bearings with 3-dot contact are characterized by one angle of double contact $\beta$, and bearings with 4-dot contact are characterized by two angles $\beta_1$ and $\beta_2$ - two double contacts with the outside ring and the internal ring, accordingly.

The prototype of the invention is the 4-dot contact rolling bearing with a symmetric pair of angles of double contact: $\beta_1$ and $\beta_2 = 44° \div 52°$ (book: Sprishevsky A.I. Rolling bearing. Mechanical engineering, Moscow, 1969, pp 97-118; in Russian). The work of such a 4-dot rolling bearing at high revolutions even in conditions of easy periodic contact of balls with the non-loaded party of a track can cause damage of a track or ball and the occurrence of additional forces working on the cage. To avoid it completely in the given design of bearings is impossible, in view of gyroscopic phenomena during evolution of a system where the bearing is established.

As a basis of the invention the idea of reducing the centrifugal forces working on rolling bodies is fixed with the purpose of creating a high-speed and high resource bearing.

The resource of work of the rolling bearing is determined by centrifugal forces working on the rolling bodies, since the mode of friction of rolling bodies with an outside ring (and, hence, mode of deterioration of contacting surfaces) depends on these forces at up to limiting revolutions. The limit of high revolution is determined by the value of the centrifugal forces when the mode of catastrophic deterioration occurs that results in the destruction of the contact areas.

According to the present invention there is provided a roller bearing comprising inner and outer bearing rings having roller raceways and rolling bodies arranged between the inner and outer rings; said bodies being in contact with the inner ring at two points on its raceways, the average contact lines of the raceways being located at an angle $\beta_1$ subtended from the rotation centre of the rolling body, and also being in contact with the outer ring at two points on its raceways, the average contact lines of the raceways being located at an angle $\beta_2$ subtended from the rotation center of the rolling body, wherein the angle $\beta_1$ between the average lines of the raceways of the inner ring is from 40° to 140°, and the angle $\beta_2$ between the average lines of the raceways of the outer ring is from 60° to 180°, and the difference between the angles $\beta_2 - \beta_1$, is from 20° to 140°.

The objective task is solved by means of a 4-dot rolling bearing with different angles of double contacts, one of which is offered to get out in limits 40° ÷ 140°, and another in limits 60° ÷ 180°, thus the difference in corners of tracks on different rings makes from 20° up to 140°.

The specified difference of angles in limits from 20° up to 140° between average lines of tracks provides a reduction in the frequency of cage rotation, and proportionally this reduction increases the frequency of rotation of the bearing, without changing the centrifugal forces from the rolling bodies and, as a consequence, raises the resource of work of the bearing.

It is inexpedient to take an angle of double contact of rolling bodies which is smaller than 60°, since the width of a track will coincide practically with the width of a track when the known angle of the prototype equal to 52°.

At an angle greater than 180°, the track ceases to serve as a support for a rolling body. It is most expedient that the difference of angles $\beta_2 - \beta_1$ between the average lines of tracks on the rings is within limits from 50° up to 120°.

At an angle smaller than 90° on the outer ring there is no essential reduction of centrifugal forces, and an angle greater than 160° is technically difficult to realize because of possible jamming of the rolling bodies as a result of the centrifugal forces and the load.

Roller bearings of the proposed design can be produced as radial, radial-thrust and thrust bearings of all sizes and angles and can have ratios of the diameter of the shaft to the diameter of the aperture and to the width of the bearing as for a usual series of bearings.

It is structurally justified and technologically expedient, that a bearing has at least one aperture made between raceways in each ring.

The presence of apertures allows effective injection of lubricant to places of contact of the rolling bodies with the ring raceways and the bearing cage, i.e. into a cavity of the bearing, and also the removal of a surplus of the lubricant.

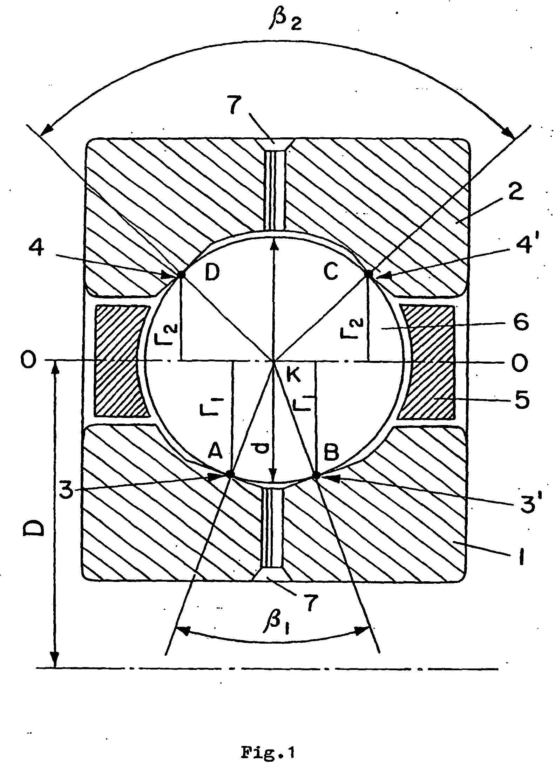

For a better understanding of the present invention, and to show how the same may be carried into effect, reference will now be made, by way of example only, to the accompanying drawing, in which Figure 1 shows a longitudinal cross-sectional view of a bearing along its axis of rotation.

A rolling element bearing according to this invention is realised as in the disclosed embodiment a ball bearing. The bearing of the invention contains the following rings: a movable ring, e.g. inner ring 1, and unmovable ring, e.g. outer ring 2, having raceways 3, 3' and 4, 4' respectively. Between the inner and outer rings 1 and 2 in a cage 5 there are arranged rolling bodies 6 in a contact with one of the rings, in this case with the rotating inner ring 1 in two points A and B, wherein the points A and B are located on the raceways 3 and 3' of the said ring 1 with its average lines located under a double contact angle $\beta_1$ equal from 40° to 140° subtended from the rotation centre K of the rolling body 6, and in contact with the other, immobile outer ring 2 in two points C and D. The points C and D are located on the raceways 4 and 4' of the ring 2 which average lines are located under a double contact angle $\beta_2$ equal from 60° to 180° subtended from the rotation centre K of the rolling body 6.

The rotation frequency of the cage 5 with the rolling bodies 6 is in direct dependence from $\cos(\beta_2/2)$ and $\cos(\beta_1/2)$, because the relation of lengths r1 or r2 of the perpendicular dropped from the contact point B or C of the rolling body 6 with the raceways 3 or 3' on the rings 1 and 2 to the rotation axis 0 - 0 of the rolling body 6 and to the half of the diameter d/2 of the maximum cross-section of the rolling body 6 is equal to $\cos((\beta_2/2)$ and $\cos(\beta_1/2)$, respectively.

The frequency of bearing rotation is inversely proportional to the frequency of the cage rotation under the same centrifugal forces acting on the rolling bodies according to the following formula:

$$n = (1+d/D)(\cos(\beta_2/2) - \cos(\beta_1/2))/2,$$

where n is the frequency of the cage rotation, d - is the diameter of the maximal cross-section of the rolling body, D - is the diameter of a circle which is taking place through the rotation centres of the rolling bodies to the rotation axis of the roller bearing shown on the fig, by the dash dot.

According to the given formula at the angles $\beta_2$=90°, $\beta_1$=40°, the frequency of rotation of the bearing grows by 1.3 times in comparison with the bearing having the angles $\beta_2 = \beta_1 = 52°$ at the same centrifugal forces acting on the rolling bodies.

At the angle $\beta_2 = 160°$ the frequency of rotation of the bearing grows by 5 times under the same conditions.

At the angle $\beta_2 = 60°$ the frequency of rotation of the bearing grows by 10%.

At the angle $\beta_2 = 180°$ centrifugal forces are practically equal to 0 and consequently the frequency of the bearing rotation is determined by friction forces in the bearing.

The bearing has at least one hole in each inner and outer ring - for injection of lubricant into a cavity of the bearing to places of contact of the rolling bodies with the raceways and for removal of a surplus of the lubricant respectively.

In this case the bearing has holes 7 in the inner and outer rings 1 and 2 respectively, the holes being made between the raceways 3 and 3', 4 and 4' along the generatix of the surface of the rolling body 6 and each of the rings contacting the rolling body 6 on two points A, B and C, D. The hole 7 on the inner ring 1 serves for feeding a lubricant, and the hole 7 on the outer ring 2 serves for removing the lubricant.

The proposed bearing can be made as a thrust ball and a roller bearing, a radial-thrust ball and a roller bearing and a radial roller bearing.

The proposed roller bearing operates as follows.

Having arranged raceways 4 and 4' on the outer ring 2 (provided that this ring is immobile) under an angle $\beta_2 = 160°$ to a surface of the rolling body 6(balls), and the raceways 3 and 3' on the inner ring 1 (mobile) under the angle $\beta_2 = 40°$ to a surface of the rolling body 6(balls) the frequency of the cage 5 rotation, and consequently of the rolling bodies 6, is lowered by 5 times, respectively, the frequency of rotation of the inner ring 1 is raised by 5 times achieving the same centrifugal force on rolling bodies as in standard radial rolling bearings. If the rotation axis 0-0 of the rolling body 6 is parallel to the rotation axis of the rings 1, 2 (dash dot line in fig.) then the bearing perceives radial loading, if the axis 0-0 is perpendicular to the plane of the rings 1, 2 then the bearing takes up the axial loading (as a thrust bearing).

The present rolling bearing has a limiting frequency of rotation 5 times greater than bearings of the same size, as well as providing identical durability, and further may have smaller friction and starting moments compared with known roller bearings.

The proposed bearings are suitable for lubricant circulating and greasing and may be used in machine-tool construction and instrument making when rotation frequencies of 100-200 thousand rev/min are required, as well as in an aircraft industry. Additionally, they are suitable for use in mechanisms with very small frequencies of rotation.

The bearings of the present invention can be beneficially applied to high-speed mechanisms (gas turbines, gyroscopes, centrifuges, spindles of machine tools). Additionally, the bearings can find application in all mechanisms where rolling bearings are used.

## Claims

1. A rolling element bearing comprising inner and outer bearing rings (1 and 2) having raceways (3,3' and 4,4') and rolling bodies (6) arranged between the inner and outer rings (1,2); said bodies being in contact with the inner ring (1) at two points (A,B) on its raceways (3,3'), the average contact lines of the raceways being located at an angle $\beta_1$ subtended from the rotation centre (K) of the rolling body (6), and also being in contact with the outer ring (2) at two points (C,D) on its raceways (4,4'), the average contact lines of the raceways being located at an angle $\beta_2$ subtended from the rotation center (K) of the rolling body (6), wherein the angle $\beta_1$ between the average lines of the raceways (3 and 3') of the inner ring (1) is from 40° to 140°, and the angle $\beta_2$ between the average lines of the raceways (4 and 4') of the outer ring (2) is from 60° to 180°, and the difference between the angles $\beta_2 - \beta_1$ is from 20° to 140°.

2. The bearing as claimed in claim 1, wherein the angle $\beta_1$ between the average lines of the raceways (3 and 3') of the inner ring (1) is from 40° to 90°.

3. The bearing as claimed in claim 1, wherein the angle $\beta_2$ between the average lines of the raceways (4 and 4') of the outer ring (2) is from 90° to 160°.

4. The bearing as claimed in claim 1, further comprising at least one hole (7) between the raceways (3 and 3') in the inner ring (1) in contact with rolling body at two points (A and B) for feeding a lubricant.

5. The bearing as claimed in claim 1, further comprising at least one hole (7) between the raceways (4 and 4') in the outer ring (2) in contact with rolling body (6) at two points (C and D) for feeding a lubricant.

## Patentansprüche

1. Wälzelementlager, umfassend innere und äußere Lagerringe (1) und (2) mit Laufbahnen (3, 3') und (4, 4') und Wälzkörpern (6), die zwischen dem inneren und äußeren Ring (1, 2) angeordnet sind; wobei die Körper mit dem inneren Ring (1) an zwei Punkten (A, B) auf seinen Laufbahnen (3, 3') in Kontakt sind, wobei die durchschnittlichen Kontaktlinien der Laufbahnen sich unter einem Winkel ($\beta_1$) befinden, der von der Drehmitte (K) des Rollkörpers (6) ausgehend aufgespannt wird, und die Körper ebenso in Kontakt mit dem äußeren Ring (2) an zwei Punkten (C, D) auf seinen Laufbahnen (4, 4') sind, wobei die durchschnittlichen Kontaktlinien der Laufbahnen sich unter einem Winkel ($\beta_2$) befinden, der von der Drehmitte (K) des Rollkörpers (6) aufgespannt wird, wobei der Winkel ($\beta_1$) zwischen den durchschnittlichen Linien der Laufbahnen (3, 3') des inneren Rings (1) von 40° bis 140° beträgt, und der Winkel ($\beta_2$) zwischen den durchschnittlichen Linien der Laufbahnen (4, 4') des äußeren Rings (2) von 60° bis 180° beträgt, und die Differenz zwischen den Winkeln ($\beta_2$) - ($\beta_1$) von 20° bis 140° beträgt.

2. Lager nach Anspruch 1, wobei der Winkel ($\beta_1$) zwischen den durchschnittlichen Linien der Laufbahnen (3, 3') des inneren Rings (1) von 40° bis 90° beträgt.

3. Lager nach Anspruch 1 wobei der Winkel ($\beta_2$) zwischen den durchschnittlichen Linien der Laufbahnen (4, 4') des äußeren Rings (2) von 90° bis 160° beträgt.

4. Lager nach Anspruch 1, weiter mindestens ein Loch (7) zwischen den Laufbahnen (3, 3') in dem inneren Ring (1) umfassend, welches mit dem Rollkörper an zwei Punkten (A und B) in Kontakt steht, um ein Schmiermittel zuzuführen.

5. Lager nach Anspruch 1, weiter mindestens ein Loch (7) zwischen den Laufbahnen (4, 4') in dem äußeren Ring (2) umfassend, das mit dem Rollkörper an zwei Punkten (C und D) in Kontakt steht, um ein Schmiermittel zuzuführen.

**Revendications**

1. Roulement comprenant des bagues de roulement intérieure et extérieure (1 et 2) comportant des chemins de roulement (3, 3' et 4, 4') et des éléments roulants (6) disposés entre les bagues intérieure et extérieure (1, 2), lesdits éléments étant en contact avec la bague intérieure (1) en deux points (A, B) sur ses chemins de roulement (3, 3'), les lignes de contact moyennes des chemins de roulement étant situées à un angle $\beta_1$ sous-tendu depuis le centre de rotation (K) de l'élément roulant (6), et étant également en contact avec la bague extérieure (2) en deux points (C, D) sur ses chemins de roulement (4, 4'), les lignes de contact moyennes des chemins étant situées à un angle $\beta_2$ sous-tendu depuis le centre de rotation (K) de l'élément de roulement (6), où l'angle $\beta_1$ entre les lignes moyennes des chemins de roulement (3 et 3') de la bague intérieure (1) est de 40° à 140°, et l'angle $\beta_2$ entre les lignes moyennes des chemins de roulement (4 et 4') de la bague extérieure (2) est de 60° à 180°, et la différence entre les angles $\beta_2$ - $\beta_1$ est de 20° à 140°.

2. Roulement selon la revendication 1, dans lequel l'angle $\beta1$ entre les lignes moyennes des chemins de roulement (3 et 3') de la bague intérieure (1) est de 40° à 90°.

3. Roulement selon la revendication 1, dans lequel l'angle $\beta_2$ entre les lignes moyennes des chemins de roulement (4 et 4') de la bague extérieure (2) est de 90° à 160°.

4. Roulement selon la revendication 1, comprenant en outre au moins un trou (7) entre les chemins de roulement (3 et 3') de la bague intérieure (1) en contact avec l'élément roulant en deux points (A et B), destiné à amener un lubrifiant.

5. Roulement selon la revendication 1, comprenant en outre au moins un trou (7) entre les chemins de roulement (4 et 4') dans la bague extérieure (2) en contact avec un élément roulant (6) en deux points (C et D), destiné à amener un lubrifiant.

Fig.1